Europäisches Patentamt

(19) **European Patent Office**

**Office européen des brevets**

(11) Numéro de publication: **0 008 553**
**B1**

(12) **FASCICULE DE BREVET EUROPEEN**

(45) Date de publication du fascicule de brevet: **04.11.81**

(51) Int. Cl.³: **B 65 G 47/46,** A 01 C 7/16

(21) Numéro de dépôt: **79400554.6**

(22) Date de dépôt: **03.08.79**

(54) **Dispositif de répartition d'un produit pulvérulent ou granuleux, notamment pour semoir ou épandeur agricole.**

(30) Priorité: **10.08.78 FR 7823615**

(43) Date de publication de la demande:
**05.03.80 Bulletin 80/5**

(45) Mention de la délivrance du brevet:
**04.11.81 Bulletin 81/44**

(84) Etats Contractants Désignés:
**AT BE CH DE GB IT LU NL SE**

(56) Documents cités:
**FR - A - 607 332**
**FR - A - 616 346**

(73) Titulaire: **NODET-GOUGIS Société anonyme dite:**
**F-77130 Montereau (FR)**

(72) Inventeur: **Lecomte, Jean-Luc**
**19, Grandes Berges**
**F-77130 Montereau (FR)**

(74) Mandataire: **Harlé, Robert et al,**
**c/o Cabinet Harlé & Lechopiez 21, rue de la**
**Rochefoucauld**
**F-75009 Paris (FR)**

Courier Press, Leamington Spa, England.

Dispositif de répartition d'un produit pulvérulent ou granuleux, notamment pour semoir ou épandeur agricole

La présente invention concerne un dispositif de répartition d'un produit pulvérulent ou granuleux.

L'invention s'applique plus particulièrement à la distribution de produits en agriculture, notamment à l'aide de semoirs ou d'épandeurs.

Les dispositifs connus actuellement et décrits notamment dans les brevets FR—A—n°616.346 et 1.148.922, comportent généralement une tête de répartition alimentée par une trémie de stockage, un conduit d'amenée unique reliant la trémie à la tête, et plusieurs conduits d'évacuation reliant celle-ci à des postes de distribution différents.

Sur les répartiteurs statiques connus, notamment des brevets US—A—n°3.189.230 et 3.631.825, le conduit unique d'alimentation débouche verticalement face au sommet d'un cône central de répartition à la base duquel les embouchures des conduits d'évacuation sont régulièrement réparties, et chacun desdits conduits alimente son propre poste de distribution qui n'est donc relié à la tête de répartition que par un seul tuyau. Lorsque l'appareil mobile sur lequel est monté ce type de dispositif connu a une position inclinée, le flux de produit sortant du tuyau d'alimentation et projeté sur le cône de répartition de la tête est décentré par rapport au sommet dudit cône et le partage du flux entre les différentes embouchures des tuyaux d'évacuation s'effectue inégalement. Il en résulte une répartition sinusoïdale du produit au sol sur la largeur de distribution de l'appareil, la courbe de répartition étant sensiblement la même avec un répartiteur tournant, c'est-à-dire un dispositif dans lequel le cône de répartition central est remplacé par un coude monté tournant à la sortie du tuyau unique d'alimentation, le flux sortant balayant successivement les embouchures des tuyaux d'évacuation.

FR—A—607.332 décrit un dispositif permettant d'obtenir une répartition égale entre les points de distribution, mais la répartition est faite à l'intérieur même du distributeur au moyen de gouttières et de lumières alternées communiquant avec des entonnoirs séparés. Ce dispositif est d'une extrême complexité encore que la distribution obtenue ne soit que double, complexité entraînant des difficultés d'entretien, des risques d'encrassement sans compter l'encombrement et le poids de la tête de répartition.

L'invention a pour but de proposer un dispositif qui résout le problème résultant de la multiplicité des points de distribution très simplement d'une part en canalisant les flux de matière à l'aide de tuyaux extérieurs à la tête et d'autre part en effectuant le regroupement des fluides produits non pas à l'intérieur de la tête mais à l'extérieur de celle-ci et enfin en faisant déboucher plusieurs tuyaux à chaque point de distribution.

Le dispositif de répartition d'un produit pulvérulent ou granuleux entre différents points de distribution notamment sur un semoir ou un épandeur comporte une tête de répartition circulaire, un conduit d'alimentation débouchant sensiblement au centre de celle-ci et une pluralité de tuyaux d'évacuation reliant extérieurement ladite tête aux points de distribution et ayant des embouchures régulièrement réparties le long du contour circulaire de celle-ci; le nombre total de tuyaux d'évacuation est un multiple du nombre de points de distribution, les tuyaux sont regroupés en un nombre de groupes égal au nombre de points, chaque groupe alimente un point différent et tous les groupes comportent le même nombre de tuyaux, et les tuyaux d'un même groupe ont leurs embouchures régulièrement réparties entre elles le long du pourtour circulaire de la tête de répartition.

Le dispositif comporte de préférence un nombre de tuyaux égal au double du nombre de points de distribution, et lesdits tuyaux sont regroupés par paires; chaque paire alimente un point de distribution et est formée par deux conduits dont les embouchures sont diamétralement opposées sur le pourtour circulaire de la tête de répartition.

De ce fait, lorsque la tête de répartition se trouve inclinée, la baisse de flux en direction des embouchures situées d'un côté de ladite tête se trouve compensée par l'augmentation de flux en direction du côté opposé, si bien que chaque point de distribution recevra un flux minimum et un flux maximum dont la somme sera sensiblement la même pour tous. Les points de distribution reçoivent ainsi une alimentation continue régulière qui est du même ordre pour tout le long de la largeur de travail de l'appareil.

L'invention va maintenant être décrite plus en détail en se référant à des modes de réalisation particuliers cités à titre d'exemples non limitatifs et représentés par les dessins annexés dans lesquels:

Fig. 1 représente schématiquement en perspective un dispositif selon l'invention;

Fig. 2 représente une variante du dispositif de la figure 1;

Fig. 3 représente une coupe d'un répartiteur à cône central selon l'invention;

Fig. 4 représente une coupe d'un répartiteur tournant selon l'invention.

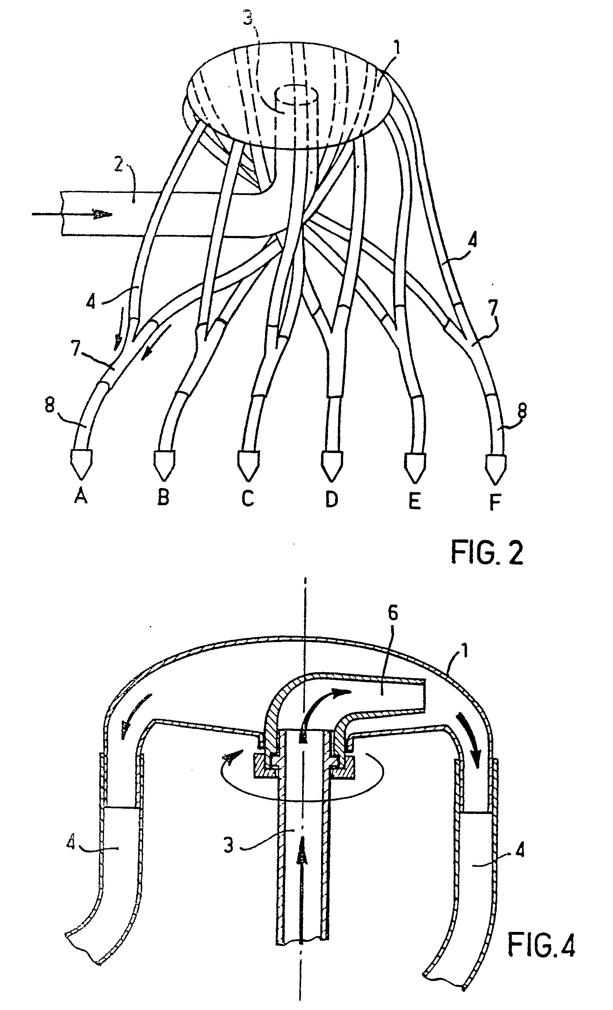

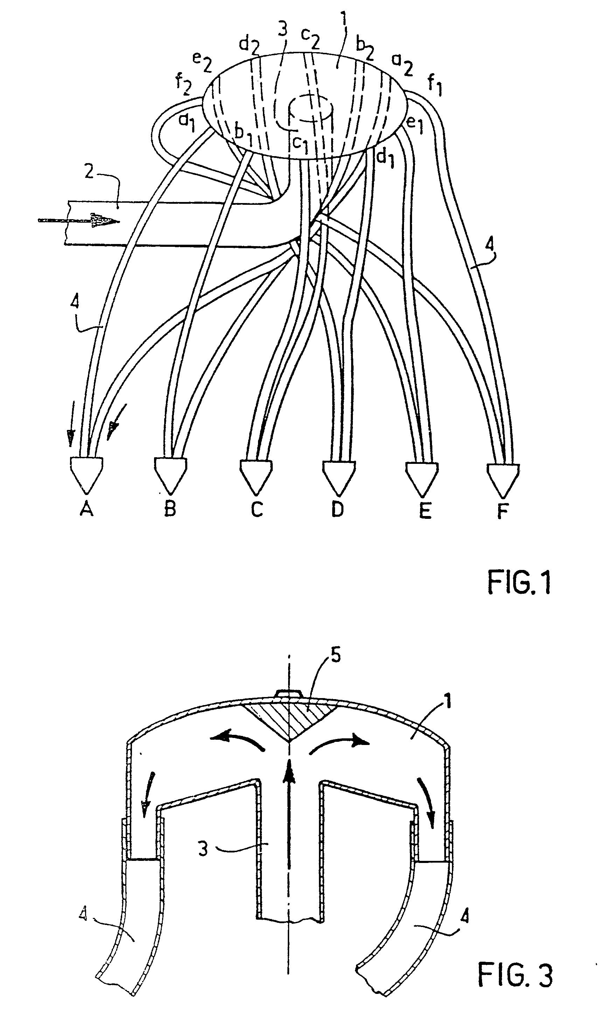

Tel que représenté sur la figure 1, le dispositif selon l'invention comprend une tête de répartition circulaire 1, alimentée en son centre par un conduit 2 d'amenée du produit pulvérulent ou granuleux à distribuer, ce conduit étant relié à une trémie de stockage non représentée. Dans le mode de réalisation décrit, la distribution est pneumatique, ce qui permet de faire arriver le flux de matière et d'air sous la tête de distribution, le conduit d'amenée 2 comportant une partie verticale ascendante 3 débouchant au centre de ladite tête 1. A la périphérie circulaire de celle-ci, sont régulièrement réparties les embouchures $a_1$, $a_2$, $b_1$, $b_2$, etc. ... de tuyaux souples d'évacuation 4 reliant la tête de répartition à des postes de distribution du produit A, B, C, D, E et F, ces postes pouvant être par exemple des socs, si le dispositif équipe un semoir, ou des organes d'épandage s'il est monté sur un épandeur d'engrais ou autre.

On notera que le nombre de tuyaux d'évacuation 4 est égal au double du nombre de postes de distribution, chaque poste A, B, etc. ... étant alimenté par deux tuyaux 4 dont les embouchures d'entrée sont diamétralement opposées sur le pourtour de la tête de répartition 1.

Ainsi, figure 1, le soc A est alimenté dans le sens des flèches par les deux tuyaux 4, dont les entrées débouchent aux deux points diamétralement opposés $a_1$ et $a_2$ du pourtour de la tête de répartition circulaire 1; de même, le soc B est alimenté par les tuyaux ayant leurs embouchures en $b_1$ et $b_2$ diamétralement opposées, etc. ...

Dans le dispositif selon la figure 1, la matière est entraînée pneumatiquement depuis la trémie de stockage et à travers le conduit 2 et sa partie ascendante 3 jusqu'à la tête 1 où le flux air-matière est soit projeté sur un cône central de répartition 5 dont le sommet est orienté vers la sortie du conduit 2 sur l'axe de celui-ci (figure 3), soit distribué tout autour du bord circulaire de la tête 1 par un coude tournant 6 monté rotatif à l'extrémité de sortie du conduit 2 (figure 4). Dans le premier cas, (répartiteur statique a cône central) le flux principal sortant du conduit d'amenée 2 est divisé en autant de flux intermédiaires continus à débits sensiblement constants qu'il existe de tuyaux d'évacuation 4, c'est-à-dire en un nombre multiple du nombre de postes de distribution. Dans le second cas (répartiteur tournant) le flux principal est successivement haché en autant de portions que de passages successifs de l'embouchure de sortie du coude face aux embouchures des tuyaux d'évacuation 4, les flux intermédiaires ainsi formés dans chacun desdits conduits 4 n'étant pas à débits sensiblement constants, comme dans le premier cas, mais au contraire à débits saccadés, dont la fréquence est fonction de la vitesse de rotation du coude et du nombre de tuyaux.

Dans les deux cas, les points de distribution du produit (soc ou organe d'épandage) sont alimentés par les flux intermédiaires provenant de deux tuyaux d'évacuation 4, dont les embouchures d'entrée sont diamétralement opposées sur le pourtour circulaire de la tête de répartition 1, si bien que, quelle que soit l'inclinaison de celle-ci lorsque l'appareil qui en est équipé se déplace sur un terrain accidenté ou en pente, ce qui entraîne une différence de débit dans les flux distribués, le flux de plus faible débit envoyé vers un point s'ajoute au flux de plus fort débit envoyé dans le conduit opposé et les débits totaux reçus par les différents points de distribution sont sensiblement les mêmes. A remarquer que les deux embouchures opposées situées sur le diamètre perpendiculaire à la direction de la pente reçoivent des flux sensiblement égaux. L'alimentation de chaque poste a ainsi un débit régulier sensiblement constant.

Le raccordement des tuyaux 4 associés, qui ont des embouchures diamétralement opposées, peut s'effectuer de deux manières différentes, soit directement aux différents points de distribution A, B, C ... (figure 1), soit par l'intermédiaire de raccords en Y désignés par la référence générale 7 sur la figure 2, lesdits raccords étant eux-mêmes reliés par des tuyaux 8 aux différents points de distribution.

Dans la variante, le mélange des deux flux s'effectue avant le point de distribution qui reçoit un débit régulier et sensiblement constant de matière.

Dans le mode de réalisation décrit ci-dessus, l'alimentation est pneumatique, mais elle peut évidemment être effectuée par tout autre moyen, et notamment par simple gravitation, le conduit d'amenée 2 n'arrivant plus par en dessous mais par dessus la tête 1, au centre de celle-ci.

Bien entendu, la portée de l'invention n'est pas limitée aux seuls modes de réalisation décrits ci-dessus à titre d'exemples non limitatifs, mais elle couvre également toute variante qui ne différerait que par des détails.

C'est ainsi qu'au lieu d'associer les tubes par paires, il est possible de les regrouper en nombre plus élevé à condition d'associer des tubes dont les embouchures sont régulièrement réparties tout autour de la tête 1.

## Revendications

1. Dispositif de répartition d'un produit pulvérulent ou granuleux entre différents points de distribution (A, B, C, D, E, F), notamment sur un semoir ou un épandeur, ce dispositif comportant une tête de répartition circulaire (1), un conduit d'alimentation (2) débouchant sensiblement au centre de celle-ci et une pluralité de tuyaux d'évacuation (4) reliant extérieurement ladite tête aux points de distribution et ayant des embouchures ($a_1$, $a_2$, $b_1$, $b_2$ etc. ...) régulièrement réparties le long du contour circulaire de celle-ci, caractérisé en ce que le nombre total de tuyaux d'évacuation (4) est un multiple du nombre de points de distribution (A, B, C, D, E, F), en ce que les tuyaux sont regroupés en un nombre de groupes égal au nombre de points, chaque groupe alimentant un point différent et tous les groupes comportant le même nombre de tuyaux et en ce que les tuyaux d'un même groupe ont leurs embouchures régulièrement réparties entre elles le long du pourtour circulaire de la tête de répartition (1).

2. Dispositif selon la revendication 1, caractérisé en ce qu'il comporte un nombre de tuyaux (4) égal au double du nombre de points de distribution (A, B, C, D, E, F), et en ce que lesdits tuyaux sont regroupés par paires, et en ce que chaque paire alimente un point de distribution et est formée par deux conduits (4) dont les embouchures sont diamétralement opposées sur le pourtour circulaire de la tête de répartition (1).

## Patentansprüche

1. Vorrichtung zum Verteilen eines pulverigen oder in Granulatform vorliegenden Materials auf mehrere Verteilerstellen (A, B, C, D, E, F), insbesondere für eine Sämaschine oder eine Streumaschine, mit einem runden Verteilerkopf (1), einer im wesentlichen im Zentrum desselben mündenden Speiseleitung (2) und einer Mehrzahl von Abführleitungen (4), die den Verteilerkopf außen mit den Verteilerstellen verbinden und deren Einlaßmündungen $(a_1, a_2, b_1, b_2 ...)$ am runden Umfang des Verteilerkopfes gleichmäßig verteilt angeordnet sind, dadurch gekennzeichnet, daß die Gesamtzahl der Abführleitungen (4) ein Vielfaches der Zahl der Verteilerstellen (A, B, C, D, E, F) ist, daß die Abführleitungen zu einer Anzahl von Gruppen gleich der Anzahl der Verteilerstellen zusammengefaßt sind, wobei jede Gruppe eine andere Verteilerstelle speist und jede Gruppe eine gleiche Zahl von Abführleitungen umfaßt, und daß die zu jeweils einer Gruppe gehörenden Abführleitungen mit ihren Einlaßmündungen untereinander gleichmäßig verteilt um den runden Umfang des Verteilerkopfes (1) angeordnet sind.

2. Vorrichtung nach Anspruch 1, dadurch gekennzeichnet, daß sie eine Anzahl von Abführleitungen (4) gleich dem Doppelten der Anzahl der Verteilerstellen (A, B, C, D, E, F) umfaßt, daß die Abführleitungen paarweise zu Gruppen zusammengefaßt sind, und daß jedes Paar eine Verteilerstelle speist und von zwei Abführleitungen (4) gebildet wird, deren Einlaßmündungen auf dem runden Umfang des Verteilerkopfes (1) einander diametral gegenüberliegen.

## Claims

1. A device for distributing a pulverulent or granular material between various dispensing points (A, B, C, D, E, F) more particularly in a seeder or a spreader, said device comprising a circular distribution head (1), a feed duct (2) opening substantially at the centre of said head and a plurality of discharge pipes (4) externally connecting said head with said dispensing points and having mouths $(a_1, a_2, b_1, b_2, etc....)$ evenly spaced around the circular contour of said head, characterized in that the total number of discharge pipes (4) is a multiple of the number of dispensing points (A, B, C, D, E, F), in that said pipes are arranged in a number of groups equal to said number of points, each group feeding a different point and all the groups including the same number of pipes, and in that the pipes of a same group have their mouths evenly spaced along the circular periphery of said distribution head (1).

2. A device according to Claim 1, characterized in that it includes a number of pipes (4) equal to twice the number of dispensing points (A, B, C, D, E, F), and in that said pipes are arranged in pairs, and in that each pair feeds a dispensing point and consists of two ducts (4) having their mouths diametrally opposed on the circular periphery of said distribution head (1).

0 008 553

FIG. 2

FIG.4

FIG.1

FIG.3